# EUROPÄISCHE PATENTSCHRIFT

(11) **EP 3 362 815 B1**
(45) Veröffentlichungstag und Bekanntmachung des Hinweises auf die Patenterteilung: **07.06.2023**
(21) Anmeldenummer: 16785107.0
(22) Anmeldetag: 29.09.2016
(51) Int. Cl.: G01S 13/75, G01S 13/89, G01S 7/02, H01Q 15/24, G01K 5/62

(54) **BILDGEBENDE POLARIMETRIE**
IMAGING POLARIMETRY
IMAGERIE POLARIMÉTRIQUE

(30) Priorität: 16.10.2015 DE 102015117712
(43) Veröffentlichungstag der Anmeldung: 22.08.2018
(73) Patentinhaber: Symeo GmbH, 85579 Neubiberg/München (DE)
(72) Erfinder: VOSSIEK, Martin, 90766 Fürth (DE); ADAMETZ, Julian, 90489 Nürnberg (DE); PÖPPERL, Maximilian, 96465 Neustadt bei Coburg (DE)
(74) Vertreter: FDST Patentanwälte
(86) Internationale Anmeldenummer: PCT/EP2016/073327
(87) Internationale Veröffentlichungsnummer: WO 2017/063894

(56) Entgegenhaltungen:
- US-A1- 2005 280 539
- US-A1- 2009 014 520
- US-A1- 2009 231 104
- SHANE ROBERT CLOUDE ET AL: "Polarimetric SAR Interferometry", IEEE TRANSACTIONS ON GEOSCIENCE AND REMOTE SENSING, IEEE SERVICE CENTER, PISCATAWAY, NJ, US, Bd. 36, Nr. 5, 1. September 1998 (1998-09-01), XP011021082, ISSN: 0196-2892
- ZAINUD-DEEN S H ET AL: "Dual-polarized chipless RFID tag with temperature sensing capability", 2014 31ST NATIONAL RADIO SCIENCE CONFERENCE (NRSC), IEEE, 28. April 2014 (2014-04-28), Seiten 9-16, XP032606543, DOI: 10.1109/NRSC.2014.6835054 ISBN: 978-1-4799-3820-9 [gefunden am 2014-06-13]
- ZOMORRODI MOHAMMAD ET AL: "Cross-polarized printable chipless RFID tag with superior data capacity", 2014 44TH EUROPEAN MICROWAVE CONFERENCE, EUROPEAN MICROWAVE ASSOCIATION, 6. Oktober 2014 (2014-10-06), Seiten 766-769, XP032706758, DOI: 10.1109/EUMC.2014.6986547 [gefunden am 2014-12-15]
- MD AMINUL ISLAM ET AL: "Design of a 16-bit ultra-low cost fully printable slot-loaded dual-polarized chipless RFID tag", MICROWAVE CONFERENCE PROCEEDINGS (APMC), 2011 ASIA-PACIFIC, IEEE, 5. Dezember 2011 (2011-12-05), Seiten 1482-1485, XP032152928, ISBN: 978-1-4577-2034-5 in der Anmeldung erwähnt
- ARNAUD VENA ET AL: "A Depolarizing Chipless RFID Tag for Robust Detection and Its FCC Compliant UWB Reading System", IEEE TRANSACTIONS ON MICROWAVE THEORY AND TECHNIQUES, IEEE SERVICE CENTER, PISCATAWAY, NJ, US, Bd. 61, Nr. 8, 1. August 2013 (2013-08-01) , Seiten 2982-2994, XP011522354, ISSN: 0018-9480, DOI: 10.1109/TMTT.2013.2267748 in der Anmeldung erwähnt

## Beschreibung

Die Erfindung betrifft ein Verfahren zur bildgebenden Polarimetrie, bei dem ein chiploser, passiver Transponder oder "Tag" verwendet wird, der mehrere Teilflächen mit unterschiedlicher polarimetrischer Eigenschaft aufweist, und bei dem mindestens ein Bild des Transponders anhand der davon reflektierten Radarstrahlung erzeugt wird. Die Erfindung betrifft auch einen passiven, chiplosen Transponder. Die Erfindung betrifft ferner ein System zur Durchführung des Verfahrens mit mindestens einem Lesegerät und mindestens einem Transponder. Die Erfindung ist beispielsweise anwendbar auf eine Informationsablesung bei hohen Temperaturen.

RFID ("Radio Frequency Identification")-Systeme mit einem Lesegerät bzw. Abfragegerät und einem abzufragenden Transponder kommen in verschiedensten Anwendungen zum Einsatz. Transponder (auch als "RFID-Tags" bezeichnet) können dabei grundsätzlich anhand ihres Aufbaus in aktive, semi-passive und passive Systeme unterteilt werden, wie beispielsweise in Stevan Preradovic, Nemai C. Karmakar, and Isaac Balbin; "RFID Transponders", IEEE Microwave Magazine, Oktober 2008, Seiten 90 bis 103, beschrieben. Des Weiteren wird zwischen chiplosen und chipbasierten Transpondern unterschieden, wobei aktive und semi-passive Systeme im Allgemeinen chipbasierte Transponder nutzen, allerdings auch passive Transponder Halbleiterchips zur Informationsspeicherung besitzen können, siehe EP 1 993 168 A2. Nachteile von chipbasierten Transpondern sind ihre hohe Kosten und ihre Anfälligkeit aufgrund verwendeter Halbleiterbauelemente und der zugehörigen Aufbau- und Verbindungstechnik besonders gegen äußere Einflüsse wie hohe oder sehr niedrige Temperaturen und mechanischer Schock und Vibrationen. Ein weiterer Nachteil chipbasierter Transponder ist die Notwendigkeit einer Energieversorgung zur Versorgung der Halbleiter-Chips und bei aktiven chipbasierter Transponder die durch eine Batterielaufzeit begrenzte Lebensdauer.

Chiplose Transponder können wiederrum aufgeteilt werden in Transponder für zeitbereichsbasierte (TDR), frequenzbasierte (FDR) oder bildbasierte Systeme.

TDR-Systeme nutzen aufgrund ihrer Funktionsweise OFW (Ober-flächenwellen)-Transponder oder Mikrowellen-Transponder. Mikrowellen-Transponder codieren ihre Information in ihrer Impulsantwort, wobei lange Verzögerungszeiten auf dem Transponder nötig sind. Um diese Verzögerungszeiten zu realisieren, müssen große geometrische Strukturen verwendet werden, wodurch erhöhte Verluste und in vielen Fällen eine Dispersion auftreten können. Bei OFW-Transpondern kann eine benötigte Verzögerungszeit durch eine Wellenkonversion von elektromagnetischen zu akustischen Wellen erzielt werden, da akustische Wellen deutlich langsamere Ausbreitungsgeschwindigkeiten aufweisen. Die Information kann bei OFW-Transpondern analog zu mikrowellenbasierten Systemen codiert werden, wie in WO 2000 039 604 A1 offenbart. Diese Wellenkonversion erzeugt allerdings hohe Verluste, was die Reichweite solcher Systeme reduziert.

FDR-Systeme werten eine Frequenzantwort eines Transponders aus, wobei meist resonante Strukturen verwendet werden, wie z.B. in WO 2011 098 719 A4 oder WO 2009 126 999 A1 beschrieben. Resonanzen von Strukturen des Transponders müssen dabei voneinander trennbar sein. Es gibt Ansätze, eine Trennung der Resonanzen anhand der Frequenzen oder räumlich durchzuführen.

Bei räumlicher Trennung können bildgebende Systeme verwendet werden, siehe M. Zomorrodi und N. C. Karmakar: "Image-based Chipless RFID System with High Content Capacity for Low Cost Tagging", IEEE International Microwave and RF Conference, Seiten 41 bis 44, 15. bis 17. Dezember 2014. Dabei wird die Auswertung der Polarisation der abgestrahlten und empfangenen elektromagnetischen Wellen nur dazu verwendet, um Störungen durch z.B. Mehrwegausbreitungen zu reduzieren. Eine weitere Anwendung der Polarisation in RFID-Tags ist der sog. Polarisationsmultiplex, bei dem zwei Datenkanäle mit Hilfe der Polarisation getrennt werden, wie in M. A. Islam und N. Karmakar: "Design of a 16-bit Ultra Low Cost Fully Printable Slot-Loaded Dual-Polarized Chipless RFID Tag", Proceedings of the Asia-Pacific Microwave Conference, Seiten 1482 bis 1485, 5. bis 8. Dezember 2011 oder WO 2013 096 995 A1 offenbart. Zusätzlich kann mit Hilfe von Polarisation bei FDR-Tags eine Amplitudenmodulation erzielt werden, wie in A. Vena, E. Perret und S. Tedjni: "A Depolarizing Chipless RFID Tag for Robust Detection and Its FCC Compliant UWB Reading System", IEEE Transactions on Microwave Theory and Techniques, Bd. 61, 2013, Nr.8, Seiten 2982 bis 2994, offenbart.

Die Anwendung von chiplosen RFID-Transpondern ist heutzutage sehr vielfältig, insbesondere soll sie den vielerorts eingesetzten Barcode ersetzten, da dieser etliche Nachteile wie eine Nichtlesbarkeit bei Verschmutzung oder Witterung hat. Des Weiteren kann der Transponder zur Lokalisierung oder Tracking von Objekten (siehe DE 197 098 47 A1 oder DE 20 2010 018 131 U1) sowie als Sensor zum Messen von Temperatur, Druck oder Feuchtigkeit (siehe WO 1993 013 495 A1) verwendet werden.

Ein Nachteil chiploser RFID-Systeme ist ihre hohe benötigte Bandbreite, welche sowohl bei TDR- als auch bei FDR-Systemen für eine hohe Datenkapazität notwendig ist. Dabei ist die Bandbreite aufgrund gesetzlicher Regulierungen nicht beliebig einstellbar. Die Datenkapazität ist bei derartigen Systemen stark eingeschränkt. So können zum Beispiel bei mikrowellenbasierten TDR-Systemen Datenraten um 16 Bit und bei FDR-Systemen Datenraten von bis zu 35 Bit erzielt werden. Für OFW-Transponder sind Datenraten von 96 Bit kommerziell verfügbar und bis zu 128 Bit wissenschaftlich beschrieben.

Dabei ist die Herstellung von OFW-Transpondern nicht kostengünstig realisierbar. Neben aufwändigem Strukturieren müssen spezielle Materialien wie LiNbO3 verwendet werden. Für FDR-Transponder müssen Materialien verwendet werden, deren Permittivität genau bekannt ist. Für TDR-Transponder, die für Mikrowellensysteme gedacht sind, müssen dispersions- und verlustarme Materialien verwendet werden. Die Materialien und Strukturen der beschriebenen chiplosen RFID-Transponder sind bisher nicht für den Einsatz bei sehr hohen Temperaturen geeignet. Ein weiterer Nachteil ist die geringe Reichweite aller bisherigen RFID-Systeme mit chiplosen passiven Transpondern.

Die Polarimetrie ist grundsätzlich bei einer Vielzahl von Radar-Anwendungen und insbesondere bei hochauflösenden, bildgebenden Systemen verbreitet. Polarisationsagile bildgebende Systeme werden unter anderem in der Erdfernerkundung (siehe WO 2015 041 295 A1) oder in der Sicherheitstechnik (siehe J. Adametz und L.-P. Schmidt: "Threat object classification with a close range polarimetric imaging system by means of H-alpha decomposition", European Radar Conference, Seiten 77 bis 80, 9. bis 11. Oktober 2013.) eingesetzt. In allen Fällen wird die polarimetrische Streuinformation von Zielen dazu genutzt, um unbekannte Objekte genauer zu klassifizieren oder zu identifizieren. Hierfür wurde in der Literatur eine Vielzahl von Auswerte-Algorithmen beschrieben. Im Bereich der Radar-Bildgebung wird häufig mittels Synthetic Aperture Radar (SAR)-Verfahren der interessierende Bereich oder das zu analysierende Objekt gescannt bzw. abgerastert, abgelaufen oder durchgelaufen und über spezielle Rekonstruktionsalgorithmen ein Bild errechnet, wie in EP 2 767 849 A2 offenbart. Dies ist auch zum Zwecke der Darstellung der räumlichen Trennung von strukturierten Flächen und nicht strukturierten Flächen in M. Zomorrodi und N. C. Karmakar verwendet.

Wird der SAR-Scan vollpolarimetrisch durchgeführt, d.h., dass das Ziel bzw. die Szenerie sequenziell mit zumindest zwei unterschiedlich polarisierten, vorzugsweise mit zwei orthogonal polarisierten Wellen, beleuchtet und die Polarisation der gestreuten Wellen aufzeichnet wird, kann nach der SAR-Prozessierung auf Basis der polarimetrischen Information eine Klassifizierung der vorhandenen Objekte durchgeführt werden. In der Fernerkundung können auf diese Weise zum Beispiel - wie in T. Moriyama, S. Uratsuka und Y. Yamaguchi: "A Study of Extraction of Urban Areas from Polarimetrie Synthetic Aperture Radar image", IEEE Geoscience and Remote Sensing Symposium, Seiten 703 bis 706, 20. bis 24. September 2004, beschrieben - sehr gut besiedelte von bewaldeten Gebieten unterschieden werden. In der Sicherheitstechnik ist mittels des vollpolarisierten SAR-Scans die Unterscheidung verschiedener Gefahrengegenstände möglich. Diese Abgrenzungen oder Kategorisierungen lassen sich mit einem konventionellen Radarsystem, welches nicht über die vollpolarimetrische Streuinformation verfügt, deutlich schwieriger darstellen. Grundsätzlich ist in einem vollpolarimetrischen Datensatz die vollständige Streuinformation eines Ziels enthalten, die für eine optimierte Klassifikation bzw. Identifikation herangezogen werden kann.

Ein Verfahren nach dem Oberbegriff des Anspruchs 1 und ein Transponder nach dem Oberbegriff des Anspruchs 8 sind aus US 2005/028539 A1 bekannt. Der Transponder weist auf mehrere Antennenelemente auf, die einfallende Radiowellen mit unterschiedlicher Amplitude, Phase und Polarisation reflektieren.

Ein chiploser Transponder (RFID Tag) ist weiterhin aus S.H. Zainud-Deen, et al., "Dual-Polarized Chipless RFID Tag with Temperature Sensing Capability", 31th National Radio Science Conference (NRSC), 2014 bekannt. Dieser RFID-Transponder ist mit horizontal und vertikal polarisierten Schlitzen versehen, die entweder dieselbe oder unterschiedliche auslesbare Information beinhalten. Der Transponder dient weiterhin als Temperatursensor.

Ein weiterer chiploser Transponder (RFID Tag) ist aus M. Zomorrodi, et al., "Cross-Polarized Printable Chipless RFID Tag with Superior Data Capacity", Proceedings of the 44th European Microwave Conference, 2014 bekannt. Dieser Transponder beinhaltet streifenförmige oder mäanderförmige Dipolstrukturen.

Weitere Transponder sind aus US 2009/0014520 A1 und US 2009/0231104 A1 bekannt.

Es ist die Aufgabe der vorliegenden Erfindung, die Nachteile des Standes der Technik zumindest teilweise zu überwinden und insbesondere eine verbesserte Möglichkeit zum Auslesen von Informationen aus einem passiven, chiplosen Transponder mittels Funkwellen, insbesondere Radarstrahlung, bereitzustellen.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch ein Verfahren zur bildgebenden Polarimetrie, bei dem ein chiploser, passiver Transponder, der mehrere Felder oder Teilflächen mit unterschiedlicher polarimetrischer Eigenschaft oder Charakteristik aufweist, mittels Funkwellen, insbesondere Radarstrahlung, mit zumindest zwei unterschiedlich polarisierten Wellen bestrahlt wird, mindestens ein polarisationskodiertes Bild des Transponders anhand der davon reflektierten Funkwellen, insbesondere Radarstrahlung erzeugt wird, und die unterschiedlichen Teilflächen des Transponders in dem polarisationskodierten Bild mittels ihrer mindestens einen polarimetrischen Eigenschaft erkannt werden.

Das Bestrahlen mittels Funkwellen mit zumindest zwei unterschiedlich polarisierten Wellen entspricht insbesondere, dass vollpolarimetrisch beleuchtet wird.

Dadurch ergibt sich der Vorteil, dass keine erhöhten Kosten und Anfälligkeit durch Halbleiterbauelemente gegen z.B. Temperaturschwankungen und Witterung auftreten und die Lebensdauer nicht durch eine Batterielaufzeit beschränkt ist. Auch sind nun Hochtemperatur-Anwendungen ohne weiteres realisierbar, z.B. in Öfen, Turbinen, Strahltriebwerken oder Stahlwerken.

Zudem werden durch die Realisierung eines bildbasierten Systems keine Verzögerungszeit benötigt und eine Wellenkonversion und die damit verbundenen hohen Verluste zur Kompensation der Verzögerungszeit vermieden. Das Auslesen der Daten erfolgt über ein bildgebendes Radarverfahren, so dass die von dem Transponder getragene Information weder in der Zeitbereichs- noch in der Frequenzbereichsantwort kodiert zu werden braucht. Dabei sind die Informationen des Transponders rein in den polarimetrischen Reflexionseigenschaften der Teilflächen bzw. der zugehörigen Teilbereiche und in deren Anordnung auf dem Transponder gespeichert. Die Kombination von Transponder und Vollpolarimetrie ergibt folglich eine vorteilhafte Methode zur Nutzung von chiplosen, passiven RFID-Transpondern, die auf einer Bildgebung basiert, aber zur Informationsspeicherung die Polarimetrie nutzt.

Auch lassen sich durch die vollpolarimetrische Beleuchtung oder Bestrahlung die unterschiedlichen Teilflächen des entsprechend ausgebildeten Transponders besonders einfach und sicher identifizieren und kategorisieren. Unter Verwendung vollpolarimetrischer Beleuchtungs- und Messmethoden können verschiedenste Strukturen voneinander getrennt werden. Dies ermöglicht eine besonders hohe Anzahl an möglichen Informationszuständen pro Transponder. Dies wiederum führt zu einer besonders hohen Datenkapazität. Ein Transponder mit mehr als 128 Bit ist realisierbar.

Das Verfahren zur bildgebenden Polarimetrie kann auch als Verfahren zum Auslesen eines chiplosen, passiven Transponders angesehen werden.

Der Transponder kann auch als Identifikationsmarke oder "Tag" bezeichnet werden. Er weist insbesondere weder ein Halbleiterbauelement noch einen elektrischen Energiespeicher auf. Der Transponder kann auch als radar-sensitiver (RFID-) Transponder oder Radar-Transponder bezeichnet werden.

Teilflächen mit unterschiedlicher polarimetrischer Eigenschaft erzeugen unterschiedliche, eindeutig unterscheidbare bzw. identifizierbare Reflexionsmuster. Die mindestens eine polarimetrische Eigenschaft der jeweiligen Teilflächen (mit oder ohne polarimetrische Struktur) ist grundsätzlich vorbekannt. Die polarimetrischen Eigenschaften der Teilflächen sind dann also mit Hilfe des verwendeten Messverfahrens unterscheidbar und eindeutig zuordenbar. Die Teilfläche kann eine Oberfläche des Transponders sein, ggf. mit dem darunterliegenden Volumenbereich oder Teilbereich des Transponders.

Unter Radarstrahlung kann insbesondere elektromagnetische Strahlung in einem Bereich zwischen 1 GHz und 1 THz verstanden werden. Dies bedeutet insbesondere, dass sowohl gesendete als auch reflektierte Radarwellen hinsichtlich ihrer Polarisation definiert beschreibbar sind. Insbesondere kann die ausgesandte und reflektierte Radarstrahlung bezüglich ihres Polarisationszustandes ausgewertet werden. Das Beleuchten mittels der Radarstrahlung kann raum- oder objektfest oder sequenziell geschehen, z.B. mittels der SAR-Methode.

Das polarisationskodierte Bild ist insbesondere ein aus der reflektierten Radarstrahlung erzeugtes Bild, dessen Bildpunkte jeweils mindestens eine Polarisationsinformation aufweisen.

Den jeweiligen Teilflächen des Transponders zugehörige Teilbilder in dem polarisationskodierten Bild können beispielsweise mittels Methoden der Objekterkennung identifiziert werden.

Aus den erkannten Teilflächen bzw. Teilbildern kann Information abgeleitet werden, z.B. indem die Teilflächen als Informationsträger analog zu Bits mit n (n > 1) möglichen Zuständen verwendet werden. Die Information des Transponders ist also in seinem polarimetrischen Rückstreuverhalten kodiert. Da dieses Rückstreuverhalten bei den verwendeten Strukturen definiert und bekannt ist, können Elemente während der Auswertung entsprechend ihrer Eigenschaften gesucht und klassifiziert werden. Jedes vorhandene, vorher definierte Rückstreuverhalten einer Teilfläche, welches von dem Rückstreuverhalten anderer Teilflächen unterscheidbar ist, beschreibt einen möglichen Informationszustand. Durch Anordnung mehrerer Elemente mit verschiedenen polarimetrisch wirksamen Strukturen und damit unterschiedlichen Informationszuständen kann Information auf dem Transponder gespeichert werden.

Es ist eine Ausgestaltung, dass mindestens eine Teilfläche durch analytisches Berechnen der mindestens einen polarimetrischen Eigenschaft aus einem zugehörigen polarisationskodierten Teilbild erkannt wird. Dies kann z.B. das Anwenden von analytischen Formeln auf ein Teilbild und ein Vergleichen eines Ergebnisses des Berechnens mit einem vorgegebenen "Referenz-"Ergebnis umfassen. Das polarimetrische Rückstreuverhalten der verwendeten Teilflächen kann also analytisch angegeben oder ausgewertet werden.

Es ist noch eine Ausgestaltung, dass mindestens eine Teilfläche anhand eines Bildvergleichs des zugehörigen Teilbilds mit mindestens einem Referenzbild erkannt wird. Dies kann beispielsweise mittels Methoden der Objekterkennung durchgeführt werden, wobei das Referenzbild wie ein Referenzobjekt genutzt werden kann. Das Referenzbild kann einer vorgegebenen Teilfläche bzw. dem zugehörigen Teilbild entsprechen.

Es ist eine weitere Ausgestaltung, dass das mindestens eine polarisationskodierte Bild des Transponders einer Pauli-Zerlegung unterzogen wird und die Teilflächen des Transponders mittels ihrer mindestens einen polarimetrischen Eigenschaft aus mindestens einem pauli-zerlegten polarisationskodierten Bild erkannt werden. Ein pauli-zerlegtes Bild ist insbesondere ein Bild, das aus dem ursprünglichen vollpolarimetrischen Bild mittels einer Pauli-Zerlegung erzeugt worden ist. Bei der Pauli-Zerlegung werden die vollpolarimetrischen Streuinformationen an jedem Pixel oder Bildpunkt in die Einzelstreuprozesse Einfachreflexion, Doppelreflexion und Volumenstreuung aufgespalten. Ein pauli-zerlegtes Bild kann also ein die Einfachreflexion, die Doppelreflexion oder die Volumenstreuung darstellendes Bild sein. Diese Ausgestaltung weist den Vorteil auf, dass sich unterschiedliche Teilflächen oder Teilbilder besonders gut und sicher unterscheiden bzw. erkennen lassen. Zumindest eine Teilfläche kann beispielsweise mittels einer Auswertung nur eines pauli-zerlegten polarisationskodierten Bilds oder Teilbilds (z.B. darstellend die Einfachreflexion) erkannt werden. Zumindest eine Teilfläche kann beispielsweise mittels einer Auswertung mehrerer pauli-zerlegten polarisationskodierten Bilder oder Teilbilder erkannt werden.

Zur Auswertung der polarimetrischen Daten kann außer der Pauli-Zerlegung oder zusätzlich zu der Pauli-Zerlegung auch ein anderer geeigneter Dekompositionsalgorithmus für die vollpolarimetrischen Bilddaten gewählt werden.

Es ist noch eine weitere Ausgestaltung, dass mindestens eine polarimetrische Eigenschaft mindestens einer dieser Teilflächen anhand einer eingebrachten polarimetrisch wirksamen Struktur erzeugt wird. So lässt sich ein sicher erkennbares Teilbild mit einfachen Mitteln erzeugen. Auch lässt sich so eine Vielzahl von unterschiedlichen Teilbildern erzeugen, was eine besonders hohe Informationsdichte ermöglicht. Eine Teilfläche mit einer glatten und in Bezug auf ihr Material homogenen polarimetrisch wirksamen Oberfläche weist insbesondere keine polarimetrisch wirksame Struktur auf. Bei einer glatten Oberfläche ist das Rückstreuverhalten insbesondere polarisationsunabhängig. In diesem Sinne wird unter einer Struktur insbesondere eine gezielt erzeugte, dreidimensionale Oberflächenform, insbesondere geometrische Struktur und/oder eine polarimetrisch wirksame Materialabfolge verstanden. Die polarimetrisch wirksame Struktur kann beispielsweise als ein Dachkantspiegel, ein Tripelspiegel, als diffuser Streukörper oder ähnliches vorliegen.

Grundsätzlich kann ein Transponder in einer Variante nur Teilflächen ohne eine polarimetrisch wirksame Struktur aufweisen. In einer anderen Variante kann ein Transponder nur Teilflächen mit polarimetrisch wirksamer Struktur aufweisen. In noch einer anderen Variante weist ein Transponder mindestens eine Teilfläche ohne eine polarimetrisch wirksame Struktur und mindestens eine Teilfläche mit einer polarimetrisch wirksamen Struktur auf.

Für die Herstellung der Strukturen der Teilflächen brauchen hier im Vergleich zu FDR- oder OFW-Tags keine hochpräzisen Strukturierungen zu erfolgen.

Die Teilflächen sind so groß bzw. weisen solche geometrischen Abmessungen auf, dass sie entsprechend des zur Verfügung stehenden Auflösungsvermögens des bildgebenden Systems gewählt sind und damit räumlich voneinander trennbar sind. Die geometrische Form - z.B. als Quadrat - kann beliebig gewählt werden. Die Teilflächen können beliebig auf dem Transponder kombiniert und angeordnet werden. Die geometrischen Abmessungen des Transponders bestimmen die maximale Anzahl an daran anordbaren Teilflächen.

Es ist eine Weiterbildung, dass die polarimetrisch wirksame Struktur eine regelmäßig geformte Struktur ist. Die regelmäßig geformte Struktur kann z.B. mehrere parallel zueinander angeordnete Längsnuten aufweisen, z.B. um einen Dachkantspiegel - insbesondere Mehrfach-Dachkantspiegel - für die Radarstrahlung zu erzeugen. Die Nuten können z.B. Seitenwände mit vorgegebenen Winkeln ("Neigungswinkel") um eine Längsausrichtung der zugehörigen Nut aufweisen. Beispielsweise durch eine Einstellung dieses Neigungswinkels und/oder durch eine vorgegebene Winkelanordnung ("Verkippungswinkel") der Teilflächen und damit der Längsausrichtung auf dem Transponder lassen sich unterschiedliche Teilbilder erzeugen. Beispielsweise für einen Dachkantspiegel kann das Rückstreuverhalten in Abhängigkeit des Verkippungswinkels berechnet werden. Umgekehrt kann vom durch das mit dem bildgebenden Radar bestimmten polarimetrischen Rückstreuverhalten auf den Verkippungswinkel rückgerechnet werden. Dies erlaubt den eindeutigen Rückschluss auf die exakte räumliche Ausrichtung der Transponder und damit die Zusammensetzung des Transponders. Damit ist die Informationsübertragung zwischen Transponder und Lesegerät über die polarimetrische Bildgebung gewährleistet.

Allgemein weist erfindungsgemäß mindestens eine polarimetrische Struktur mindestens eine polarimetrisch wirksame Seitenwand auf, die einen vorgegebenen Neigungswinkel und/oder Verkippungswinkel aufweist.

Es ist auch eine Ausgestaltung, dass mindestens eine polarimetrische Eigenschaft mindestens einer dieser Teilflächen anhand ihres Materials erkannt wird. Der Transponder kann also Teilflächen bzw. entsprechende Teilbereiche mit unterschiedlichem Material oder unterschiedlichen Materialgruppen aufweisen, die ein merklich unterschiedliches polarimetrisches Rückstreuverhalten, insbesondere eine unterschiedliche Permittivität, zeigen.

Es ist ferner eine Ausgestaltung, dass aus mindestens einer polarimetrischen Eigenschaft mindestens eines Teilbereichs eine Temperatur des Transponders ermittelt wird. So kann der Transponder als Temperatursensor eingesetzt werden, und zwar auch bei hohen Temperaturen.

Es ist außerdem eine Ausgestaltung, dass mindestens ein Teilbereich eine sich polarimetrisch wirksam temperaturabhängig ändernde Struktur oder Form (einschließlich Ausdehnung) aufweist. Beispielsweise kann die Teilfläche bzw. der die Teilfläche aufweisende Teilbereich mindestens einen als Bimetall-Stück ausgebildeten Dachkantspiegel aufweisen. Durch Temperaturänderung ändern sich die Seitenwinkel bzw. Neigungswinkel des Dachkantspiegels und dadurch das Reflexionsverhalten der Struktur. Aus der Änderung des Rückstreuverhaltens kann die Temperatur ermittelt werden. Diese Ausgestaltung weist den Vorteil auf, dass die Temperatur anhand nur dieses Teilbereichs bestimmbar ist.

Eine weitere Möglichkeit der Temperaturmessung mit Hilfe des Transponders besteht darin, reflektierende Elemente mit Materialien, deren Permittivität von der Temperatur abhängig ist, zu gestalten, z.B. zu beschichten oder zu füllen. Die Temperatur kann dann zum Beispiel über den Phasenunterschied der reflektierten Radarstrahlung zu nicht temperaturabhängig gestalteten, insbesondere beschichteten oder gefüllten, Teilbereichen ermittelt werden.

Noch eine weitere Möglichkeit zur Nutzung des Transponders als Temperaturfühler oder Temperatursensor ergibt sich zum Beispiel durch Ausnutzung verschiedener thermischer Ausdehnungskoeffizienten unterschiedlicher Materialien. Dieser Effekt beeinflusst die Höhe der einzelnen Teilbereiche. In diesem Fall kann beispielsweise über einen Phasenunterschied der von den zwei Teilbereichen reflektierten Radarstrahlung die Temperatur bestimmt werden.

Die Aufgabe wird auch gelöst durch einen passiven, chiplosen Transponder, aufweisend mindestens zwei Teilflächen mit unterschiedlicher polarimetrischer Struktur. Der Transponder kann analog zu dem Verfahren ausgebildet werden und ergibt die gleichen Vorteile, und umgekehrt. Er kann mit dem Verfahren verwendet werden, jedoch ist das Verfahren nicht darauf beschränkt.

Die Teilflächen bzw. zugehörigen Teilbereiche sind räumlich voneinander trennbar bzw. getrennt, insbesondere nebeneinander bzw. zweidimensional angeordnet. Der Transponder ist insbesondere plattenförmig, wobei die rückstreuenden Teilflächen Teilen einer Hauptfläche der Platte entsprechen.

Eine Teilfläche kann insbesondere eine Oberfläche eines Teilbereichs des Transponders aufweisen. Ein solcher Transponder weist also mindestens zwei Teilflächen oder Teilbereiche mit einer unterschiedlichen Oberflächenstruktur und/oder Materialstruktur auf. Eine durchgängig glatte Oberfläche eines in Bezug auf sein Material homogenen Teilbereichs stellt in diesem Sinne insbesondere keine Teilfläche oder Teilbereich mit polarimetrischer Struktur dar. Eine solche "glatte" Teilfläche kann jedoch durchaus eindeutig identifizierbar sein.

Es ist noch eine Ausgestaltung, dass mindestens zwei Teilbereiche polarimetrische Strukturen mit gleicher Grundform, aber unterschiedlicher Dimensionierung und/oder Ausrichtung (Verkippungswinkel) auf dem Transponder aufweisen. Eine unterschiedliche Dimensionierung kann z.B. eine unterschiedliche Höhe, Breite oder Anwinkelung sein, z.B. einer Längsnut eines Dachspiegels.

Es ist auch noch eine Ausgestaltung, dass der Transponder aus einem Material oder aus einem Materialverbund besteht. Er kann insbesondere einstückig hergestellt sein. Die unterschiedlichen Teilflächen können dann durch eine Oberflächenbehandlung hergestellt werden, z.B. durch Mikrofräsen. Alternativ kann der Transponder bereits als fertiges Teil, z.B. Gussteil oder Spritzteil, hergestellt worden sein. Ein solcher Transponder ist besonders einfach herstellbar und besonders robust.

Es ist ferner eine Ausgestaltung, dass unterschiedlichen Teilflächen Materialien mit unterschiedlichem polarimetrischen Rückstreuverhalten zugeordnet sind. Dies ergibt den Vorteil, dass eine Unterscheidung und Erkennung der Teilflächen sicher auch ohne eine Strukturierung durchführbar ist. Zudem lassen sich so Sensorfunktionalitäten besonders einfach umsetzen.

Als Material oder Materialien eignen sich neben elektrischen Leitern - wie Metallen - auch Keramiken oder Polymere bzw. Kunststoffe. Beispielsweise kann der Transponder als ein solider Aluminiumblock vorliegen. Hochtemperaturfeste Materialien wie Keramik eignen sich sehr für Anwendungen bei hohen Temperaturen, da hier keine Verformung oder Beschädigung der Materialien durch die hohen Temperaturen auftritt. Die Verwendung von Materialkombinationen ist zusätzlich möglich. Die nahezu freie Wahl an Materialien und die geringen Anforderungen an Fertigungstoleranzen kann für eine kostengünstige Produktion genutzt werden.

Zumindest eine der Teilflächen kann mit einer Beschichtung versehen sein, welche entweder ein Auslesen oder Bestimmen ihrer polarimetrischen Eigenschaft verbessert oder polarimetrisch wirkungslos ist. Die Beschichtung kann einlagig oder mehrlagig mit ein oder mehreren Materialien sein. Die Beschichtung kann eine Lackierung sein. Eine solche Beschichtung kann z.B. eine Schutzbeschichtung sein, z.B. gegen eine mechanische und/oder chemische Beanspruchung - z.B. Korrosion. Zusätzlich oder alternativ kann die mindestens eine Beschichtung eine Reflexion verstärken, um ein genaueres Bild zu erhalten, und/oder um sie temperaturabhängig zu ändern.

Die Aufgabe wird auch gelöst durch ein System, das mindestens ein Lesegerät und mindestens einen Transponder wie oben beschrieben aufweist. Das Lesegerät kann zum Ablauf des oben beschriebenen Verfahrens eingerichtet sein. Der Informationsgehalt des polarimetrischen Transponders ist bei bekanntem Abstand vom Lesegerät zum Transponder oder unter Einbeziehung von Autofokus-Verfahren nicht von der Bandbreite abhängig, wie bei herkömmlichen chiplosen RFID-Systemen. Dadurch entfällt die Begrenzung der Datakapazität durch gesetzliche Regulierungen. Es wird so ein System angegeben, das eine neue Anwendung der polarimetrischen Bildgebung ergibt, die hier erstmals zum Informationsaustausch genutzt wird.

Vielmehr kann insbesondere eine zweidimensionale Anordnung der Teilflächen verwendet werden, wobei verschiedenste Informationszustände pro Teilfläche genutzt werden können. Auch damit können deutlich höhere Datenkapazitäten als bei herkömmlichen chiplosen Systemen erreicht werden. Begrenzendes Element ist dabei die geometrische Größe des Transponders im Verhältnis zum Auflösungsvermögen des Lesegeräts, insbesondere dessen bildgebenden Radars. Dieses kann durch Erhöhung der Frequenz oder einer Aperturgröße verbessert werden. Durch ein verbessertes Auflösungsvermögen kann die Strukturgröße bzw. die Größe eines Transponders verringert werden, weshalb bei gleicher Baugröße mehr Teilflächen auf einem Transponder Platz finden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird. Dabei können zur Übersichtlichkeit gleiche oder gleichwirkende Elemente mit gleichen Bezugszeichen versehen sein.
- Fig. 1: zeigt ein polarimetrisches Radarbild eines erfindungsgemäßen Radar-Transponders mit verschiedenen Teilflächen;
- Fig. 2: zeigt eine Skizze von Teilflächen des Radar-Transponders aus Fig. 1;
- Fig. 3: zeigt ein Bild des Radar-Transponders, dessen Bildpunkte die Intensitäten der Streuprozesse angeben;
- Fig. 4: zeigt ein pauli-zerlegtes Bild des Radar-Transponders, das eine Doppelreflexion angibt;
- Fig. 5: zeigt ein pauli-zerlegtes Bild des Radar-Transponders, das eine Volumenstreuung angibt;
- Fig. 6: zeigt eine Intensität des Anteils der Doppelreflexion der Paulizerlegung bei einem pauli-zerlegten Bild des Transponders; und
- Fig. 7: zeigt eine Intensität des Anteils der Volumenstreuung der Paulizerlegung bei einem pauli-zerlegten Bild des Transponders.

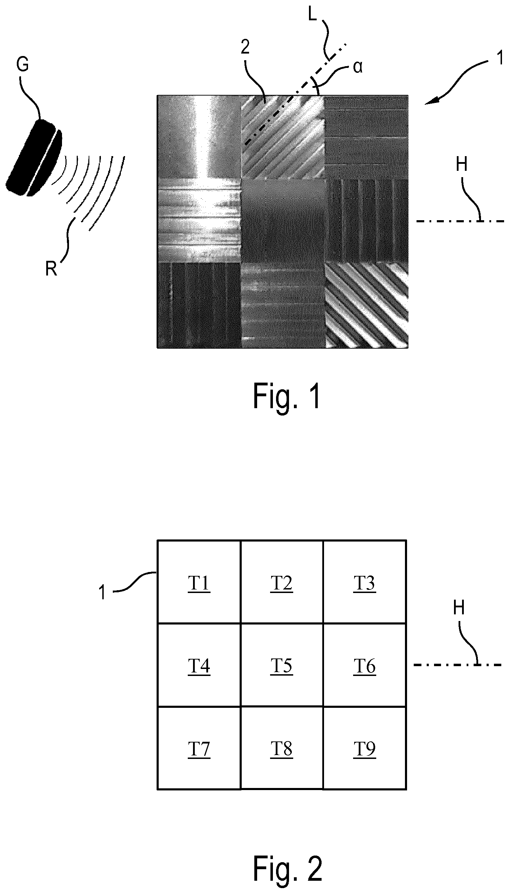

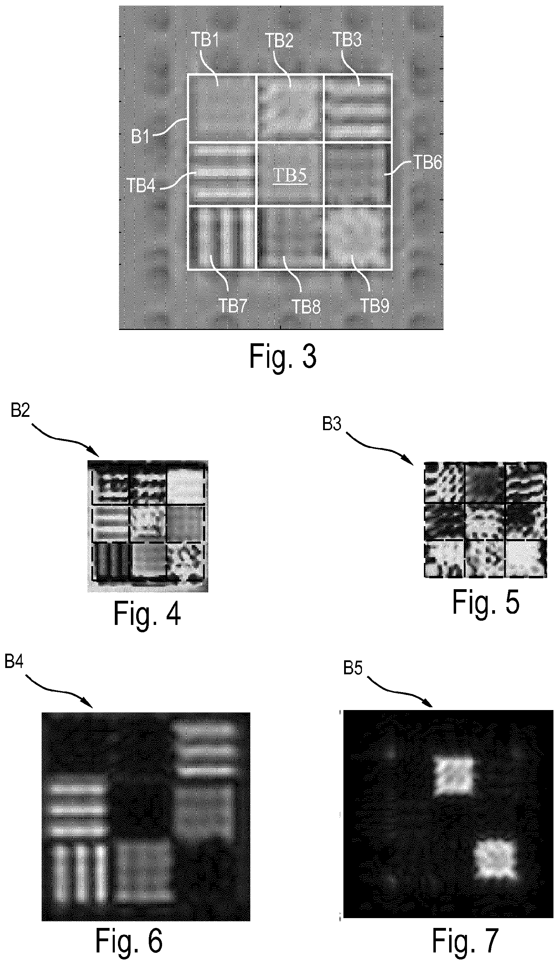

Fig. 1 zeigt einen Transponder 1, der als ein plattenförmiges Aluminiumteil mit einer in Draufsicht quadratischen Kontur ausgebildet ist. Eine Kantenlänge kann beispielsweise ca. 10 cm betragen. Der Transponder 1 kann mittels eines Lesegeräts G mit vollpolarisierten Funkwellen, insbesondere Radarstrahlung R, bestrahlt werden. Die an dem Transponder 1 reflektierte oder rückgestreute Strahlung kann von dem Lesegerät G detektiert und dort oder in einer eigenständigen Auswerteeinrichtung (o. Abb.) ausgewertet werden. Insbesondere kann mittels der detektierten rückgestreuten Strahlung mindestens ein Bild B1 bis B3 (siehe z.B. Fig. 3 bis 5) erzeugt werden, dessen Bildpunkte eine Polarisationsinformation tragen.

Fig. 2 zeigt eine Skizze von neun Feldern oder Teilflächen T1 bis T9 des Transponders 1. Die Teilflächen T1 bis T9 weisen ebenfalls eine quadratische Form auf und sind gleich groß.

Die polarimetrischen Charakteristika der Teilflächen T1 bis T9 sind mit Hilfe des verwendeten Messverfahrens der Radarabfrage unterscheidbar und eindeutig zuordenbar. Die Informationen des Transponders 1 sind in dem polarimetrischen Rückstreuverhalten kodiert. Da das Rückstreuverhalten bei den verwendeten Teilflächen T1 bis T9 definiert und bekannt ist, können sie während der Auswertung entsprechend ihrer Eigenschaften gesucht und klassifiziert werden. Jedes vorhandene, vorher definierte Rückstreuverhalten, beschreibt einen möglichen Informationszustand. Durch Anordnung mehrerer Teilflächen T1 bis T9, die sich hier durch ihre geometrische Oberflächenstruktur bzw. deren Fehlen voneinander unterscheiden können, und damit unterschiedlichen Informationszuständen kann Information auf dem Transponder 1 gespeichert werden.

Bei dem Transponder 1 sind zum Beispiel Teilflächen T1 bis T9 mit fünf verschiedenen Informationszuständen vorhanden. Dazu sind die beiden Teilflächen T1 und T5 als glatte Teilflächen ausgebildet, die Teilfläche T2 als Dachkantspiegel mit einem Verkippungswinkel α einer Längsachse L von darin eingebrachten parallelen Längsnuten 2 von +45° gegen die Horizontale H, die Teilflächen T3, T4 und T8 als Dachkantspiegel mit einem Verkippungswinkel α der darin eingebrachten parallelen Längsnuten 2 von +0° gegen die Horizontale H, die Teilflächen T6 und T7 als Dachkantspiegel mit einem Verkippungswinkel α der darin eingebrachten parallelen Längsnuten 2 von 90° gegen die Horizontale H und die Teilfläche T9 als Dachkantspiegel mit einem Verkippungswinkel α der darin eingebrachten parallelen Längsnuten 2 von -45° gegen die Horizontale H. In diesem Beispiel würde sich ein Codeumfang von 20 Bit ergeben. Dabei hängt der Informationsgehalt eines Transponders 1 zum einen von der Anzahl der möglichen Informationszustände pro Feld oder Teilfläche und zum anderen von der Anzahl der verwendbaren Felder oder Teilflächen ab. Mit mehr Teilflächen lassen sich auf diese Art und Weise hohe Datenraten erzielen.

In der Praxis können als Strukturen beispielsweise auch Teilflächen mit Tripelspiegeln, diffusen Streukörpern oder ähnliches verwendet werden. Dabei sollte allgemein gewährleistet sein, dass die einzelnen Teilflächen sowohl polarimetrisch als auch räumlich voneinander trennbar sind. Das bedeutet, dass die geometrischen Abmessungen der Teilflächen entsprechend dem zur Verfügung stehenden Auflösungsvermögen des bildgebenden Systems gewählt werden sollten. Die geometrische Form der Teilflächen - hier: Quadrat - kann dabei beliebig gewählt werden. Die Teilflächen können beliebig auf einem Transponder kombiniert und angeordnet werden. Die maximalen geometrischen Abmessungen bestimmen die maximale Anzahl an Elementen eines Transponders.

Fig. 3 zeigt ein Bild des Transponders 1, dessen Bildpunkte die Intensitäten der Streuprozesse angeben. Insbesondere gilt dies für die dargestellte Gesamtintensität, d.h. die Summe aller Einzelleistungen der Paulizerlegung. Dabei zeigt Fig. 3 ein Graustufenbild B1, während die Intensitäten der Streuprozesse vorteilhafterweise auch gemäß einer RGB-Farbskala dargestellt werden können. Das Bild B1 weist Teilbilder TB1 bis TB9 auf, die den Teilflächen T1 bis T9 entsprechen und die die von diesen Teilflächen T1 bis T9 rückgestreute Strahlung darstellen. Anhand dieser bildlichen Darstellung können zunächst die glatten Teilflächen T1 und T5 von den anderen Teilflächen T2 bis T4 und T6 bis T9, die als Dachkantspiegel für die einfallende Radarstrahlung wirken, eindeutig unterschieden werden. Weiterhin lassen sich bereits einige dieser Teilflächen T2 bis T4 und T6 bis T9 voneinander unterscheiden.

Fig. 4 zeigt ein pauli-zerlegtes Bild B2 des Transponders 1, das nur die Doppelreflexionsanteile der Streuprozesse - genauer: die der Doppelreflexion zugehörigen Phasen - angibt.

Dabei werden entsprechende Teilbilder (ohne Bezugszeichen) erzeugt, die hier durch die gestrichelt eingezeichneten Linien umrandet sind.

Fig. 5 zeigt ein pauli-zerlegtes Bild B3 des Transponders 1, das nur die Volumenstreuungsanteile der Streuprozesse - genauer: die der Volumenstreuung zugehörigen Phasen - angibt. Auch hier werden entsprechende Teilbilder (ohne Bezugszeichen) erzeugt, die durch die gestrichelt eingezeichneten Linien umrandet sind.

Fig. 6 zeigt eine Intensität des Anteils der Doppelreflexion der Paulizerlegung bei einem pauli-zerlegten Bild B4 des Transponders 1. Dabei werden hier wieder neun skizzierte entsprechende Teilbilder erzeugt.

Fig. 7 zeigt eine Intensität des Anteils der Volumenstreuung der Paulizerlegung bei einem pauli-zerlegten Bild B5 des Transponders 1. Auch hier werden wieder neun skizzierte entsprechende Teilbilder erzeugt.

Auch Fig. 4 bis Fig. 7 zeigen Graustufenbilder, während die Intensitäten der Streuprozesse vorteilhafterweise auch gemäß einer RGB-Farbskala dargestellt werden können.

Über einen Vergleich der Teilbilder von z.B. Fig. 3, Fig. 4 und Fig. 5 (in beliebiger geeigneter Kombination und/oder mit mindestens einem Referenz(teil)bild [ohne Abb.]) können nun auch die bisher noch nicht unterschiedenen Teilflächen T2 bis T4 und T6 bis T9 mit Dachkantspiegeln verschiedener Verkippungswinkel eindeutig voneinander unterschieden werden. Auch die Teilbilder der Fig. 6 und 7 sind dazu einsetzbar.

Im Vergleich zu vielen bisherigen RFID-Systemen wird die Information im vorgestellten Transponder 1 weder in der Zeitbereichs- noch in der Frequenzbereichsantwort kodiert. Das Auslesen der Daten des Transponders 1 erfolgt über ein bildgebendes Radarverfahren. Dabei sind die Informationen des Transponders 1 rein in den polarimetrischen Reflexionseigenschaften der Teilflächen T1 bis T9 und in deren Anordnung auf dem Transponder 1 gespeichert.

Das polarimetrische Rückstreuverhalten der verwendeten Teilflächen T1 bis T9 kann analytisch angegeben werden. Im Falle der glatten Teilflächen T1 und T5 ist das Rückstreuverhalten polarisationsunabhängig. Für die Teilflächen T2 bis T4 und T6 bis T9 mit Dachkantspiegeln kann das Rückstreuverhalten in Abhängigkeit des Verkippungswinkels berechnet werden. Umgekehrt kann von dem durch das mit dem bildgebenden Radar bestimmten polarimetrischen Rückstreuverhalten auf den Verkippungswinkel rückgerechnet werden. Dies erlaubt den eindeutigen Rückschluss auf die exakte Ausrichtung der Teilflächen T1 bis T9 und damit die Zusammensetzung des Transponders 1. Somit ist die Informationsübertragung zwischen dem Transponder 1 und dem Lesegerät G über die polarimetrische Bildgebung gewährleistet.

Die Kombination von RFID, insbesondere Radarauslesung, und Polarimetrie stellt einen neuen Typ von chiplosen, passiven RFID-Systemen dar, der zwar auf einer Bildgebung basiert, aber zur Informationsspeicherung die Polarimetrie nutzt. Außerdem stellt das System eine neue Anwendung der polarimetrischen Bildgebung dar, die hier zum Informationsaustausch genutzt wird.

Die flexible Materialwahl und der Aufbau der einzelnen Teilflächen T1 bis T9 ermöglichen den Einsatz des Transponders 1 bei hohen Temperaturen, wo es zusätzlich zur Informationsübertragung auch als Temperatur-Sensor eingesetzt werden kann.

Obwohl die Erfindung im Detail durch die gezeigten Ausführungsbeispiele näher illustriert und beschrieben wurde, so ist die Erfindung nicht darauf eingeschränkt und andere Variationen können vom Fachmann hieraus abgeleitet werden, ohne den Schutzumfang der Erfindung zu verlassen.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

## Patentansprüche

1. Verfahren zur bildgebenden Polarimetrie, bei dem
- ein chiploser, passiver Transponder (1), der mehrere Teilflächen (T1-T9) mit unterschiedlicher polarimetrischer Eigenschaft aufweist, mittels Radarstrahlung (R) mit zumindest zwei unterschiedlich polarisierten Wellen bestrahlt wird, insbesondere vollpolarimetrisch beleuchtet wird,
- mindestens ein polarisationskodiertes Bild (B1-B3) des Transponders (1) anhand der davon reflektierten Radarstrahlung (R) erzeugt wird, und
- die unterschiedlichen Teilflächen (T1-T9) des Transponders (1) in dem polarisationskodierten Bild (B1-B3) mittels ihrer mindestens einen polarimetrischen Eigenschaft erkannt werden, wobei
- mindestens eine polarimetrische Eigenschaft mindestens einer dieser Teilflächen (T1-T9) anhand einer eingebrachten polarimetrisch wirksamen Struktur (2, α) erzeugt wird
**dadurch gekennzeichnet,**
**dass** die Struktur (2) mindestens eine Seitenwand aufweist, die einen vorgegebenen Neigungswinkel aufweist.

2. Verfahren nach Anspruch 1, bei dem mindestens eine Teilfläche (T1-T9) durch analytisches Berechnen der mindestens einen polarimetrischen Eigenschaft aus einem zugehörigen polarisationskodierten Teilbild (TB1-TB9) erkannt wird.

3. Verfahren nach einem der vorhergehenden Ansprüche, bei dem mindestens eine Teilfläche (T1-T9) anhand eines Bildvergleichs eines zugehörigen polarisationskodierten Teilbilds (TB1-TB9) mit mindestens einem Referenzbild erkannt wird.

4. Verfahren nach einem der vorhergehenden Ansprüche, bei dem das mindestens eine polarisationskodierte Bild (B1) des Transponders (1) einer Pauli-Zerlegung unterzogen wird und die Teilflächen (T1-T9) des Transponders (1) mittels ihrer mindestens einen polarimetrischen Eigenschaft aus mindestens einem pauli-zerlegten Bild (B2, B3) erkannt werden.

5. Verfahren nach einem der vorhergehenden Ansprüche, bei dem mindestens eine Teilfläche mit einer glatten und in Bezug auf ihr Material homogenen polarimetrisch wirksamen Oberfläche versehen ist.

6. Verfahren nach einem der vorhergehenden Ansprüche, bei dem aus mindestens einer polarimetrischen Eigenschaft mindestens einer Teilfläche (T1-T9) eine Temperatur des Transponders (1) ermittelt wird.

7. Verfahren nach Anspruch 6, bei dem mindestens eine Teilfläche (T1-T9) eine sich polarimetrisch wirksam temperaturabhängig ändernde Struktur aufweist.

8. Passiver, chiploser Transponder (1), aufweisend mindestens zwei Teilflächen (T1-T9) mit unterschiedlicher polarimetrischer Struktur (2, α),
dadaurch gekennzeichnet,
dass die mindestens eine polarimetrische Struktur (2) mindestens eine Seitenwand aufweist, die einen vorgegebenen Neigungswinkel aufweist.

9. Transponder (1) nach Anspruch 8, bei der mindestens zwei Teilflächen (T1-T9) polarimetrische Strukturen (2) mit gleicher Grundform, aber unterschiedlicher Dimensionierung und/oder Ausrichtung (α) aufweisen.

10. Transponder (1) nach Anspruch 8 oder 9, bei dem der Transponder (1) aus einem Material oder Materialverbund besteht.

11. Transponder (1) nach einem der Ansprüche 8 bis 10, bei dem unterschiedlichen Teilflächen (T1-T9) Materialien mit unterschiedlichem polarimetrischen Rückstreuverhalten zugeordnet sind.

12. System (G, 1) zum Durchführen des Verfahrens nach einem der Ansprüche 1 bis 7 mit mindestens einem Transponder (1), insbesondere nach einem der Ansprüche 8 bis 11, und mindestens einem Lesegerät (G) zum radarbasierten Auslesen des mindestens einen Transponders (1).

## Claims

1. Method for imaging polarimetry, in which
- a chipless, passive transponder (1), which has a number of partial surfaces (T1-T9) with different polarimetric properties, is irradiated by means of radar radiation (R) with at least two differently polarized waves, in particular is illuminated fully polarimetrically,
- at least one polarization-coded image (B1-B3) of the transponder (1) is generated based on the radar radiation (R) reflected therefrom, and
- the different partial surfaces (T1-T9) of the transponder (1) are detected in the polarization-coded image (B1-B3) by means of their at least one polarimetric property, wherein
- at least one polarimetric property of at least one of these partial surfaces (T1-T9) is generated based on an introduced polarimetrically effective structure (2, α)
**characterized in**
**that** the structure (2) has at least one side wall, which has a predetermined angle of inclination.

2. Method according to claim 1, wherein at least one partial surface (T1-T9) is detected by analytically calculating the at least one polarimetric property from an associated polarization-encoded partial image (TB1-TB9).

3. Method according to one of the preceding claims, wherein at least one partial surface (T1-T9) is detected based on an image comparison of an associated polarization-encoded partial image (TB1-TB9) with at least one reference image.

4. Method according to one of the preceding claims, wherein the at least one polarization-encoded image (B1) of the transponder (1) is subjected to a Pauli decomposition and the partial surfaces (T1-T9) of the transponder (1) are detected by means of their at least one polarimetric property from at least one Pauli decomposed image (B2, B3).

5. Method according to one of the preceding claims, in which at least one partial surface is provided with a smooth and, with respect to its material, homogeneous polarimetrically effective surface.

6. Method according to one of the preceding claims, in which a temperature of the transponder (1) is determined from at least one polarimetric property of at least one partial surface (T1-T9).

7. Method according to claim 6, wherein at least one partial surface (T1-T9) has a polarimetrically effective temperature-dependent changing structure.

8. Passive, chipless transponder (1), comprising at least two partial surfaces (T1-T9) with different polarimetric structure (2, α),
**characterized in**
**that** the at least one polarimetric structure (2) has at least one side wall, which has a predetermined angle of inclination.

9. Transponder (1) according to claim 8, in which at least two partial surfaces (T1-T9) have polarimetric structures (2) with the same basic shape but different dimensions and/or orientation (α).

10. Transponder (1) according to claim 8 or 9, wherein the transponder (1) consists of a material or material composite.

11. Transponder (1) according to one of claims 8 to 10, in which materials with different polarimetric backscattering behavior are assigned to different partial surfaces (T1-T9).

12. System (G, 1) for carrying out the method according to one of claims 1 to 7, comprising at least one transponder (1), in particular according to one of claims 8 to 11, and at least one reader (G) for radar-based reading of the at least one transponder (1).

## Revendications

1. Procédé pour l'imagerie par polarimétrie, dans lequel
- un transpondeur (1) passif sans puce, qui comprend plusieurs surfaces partielles (T1-T9) avec des propriétés polarimétriques différentes, est irradié au moyen d'un rayonnement radar (R) avec au moins deux ondes polarisées différemment, en particulier est éclairé de manière entièrement polarimétrique,
- au moins une image codée en polarisation (B1-B3) du transpondeur (1) est générée à partir du rayonnement radar (R) réfléchi par celui-ci, et
- les différentes surfaces partielles (T1-T9) du transpondeur (1) sont détectées dans l'image codée par polarisation (B1-B3) au moyen de leur au moins une propriété polarimétrique, dans lequel
- au moins une propriété polarimétrique d'au moins une de ces surfaces partielles (T1-T9) est générée sur la base d'une structure polarimétriquement efficace (2, α) introduite
**caractérisé en ce**
**que** la structure (2) comprend au moins une paroi latérale, qui a un angle d'inclinaison prédéterminé.

2. Procédé selon la revendication 1, dans lequel au moins une surface partielle (T1-T9) est détectée par calcul analytique de la au moins une propriété polarimétrique à partir d'une image partielle associée (TB1-TB9) codée en polarisation.

3. Procédé selon l'une des revendications précédentes, dans lequel au moins une surface partielle (T1-T9) est détectée sur la base d'une comparaison d'image d'une image partielle associée (TB1-TB9) codée en polarisation avec au moins une image de référence.

4. Procédé selon l'une des revendications précédentes, dans lequel l'au moins une image (B1) du transpondeur (1) codée en polarisation est soumise à une décomposition de Pauli et les surfaces partielles (T1-T9) du transpondeur (1) sont détectées au moyen de leur au moins une propriété polarimétrique à partir d'au moins une image (B2, B3) décomposée en Pauli.

5. Procédé selon l'une des revendications précédentes, dans lequel au moins une surface partielle est pourvue d'une surface lisse et homogène polarimétrique efficace par rapport à son matériau.

6. Procédé selon l'une des revendications précédentes, dans lequel une température du transpondeur (1) est déterminée à partir d'au moins une propriété polarimétrique d'au moins une surface partielle (T1-T9).

7. Procédé selon la revendication 6, dans lequel au moins une surface partielle (T1-T9) a une structure, qui se modifie de manière polarimétrique efficace en fonction de la température.

8. Transpondeur (1) passif sans puce, comprenant au moins deux surfaces partielles (T1-T9) avec une structure polarimétrique différente (2, α),
**caractérisé en ce**
**que** la au moins une structure polarimétrique (2) comprend au moins une paroi latérale, qui a un angle d'inclinaison prédéterminé.

9. Transpondeur (1) selon la revendication 8, dans lequel au moins deux surfaces partielles (T1-T9) ont des structures polarimétriques (2) de même forme de base, mais de dimensionnement et/ou d'orientation (α) différents.

10. Transpondeur (1) selon la revendication 8 ou 9, dans lequel le transpondeur (1) est constitué d'un matériau ou d'un composite de matériaux.

11. Transpondeur (1) selon l'une des revendications 8 à 10, dans lequel des matériaux avec des caractéristiques de rétrodiffusion polarimétrique différentes sont associés à différentes surfaces partielles (T1-T9).

12. Système (G, 1) pour la mise en oeuvre du procédé selon l'une des revendications 1 à 7, comprenant au moins un transpondeur (1), notamment selon l'une des revendications 8 à 11, et au moins un appareil de lecture (G) pour la lecture à base de radar dudit au moins un transpondeur (1).
